(19) **Europäisches Patentamt / European Patent Office / Office européen des brevets**

(11) **EP 4 714 752 A1**

(12) **EUROPEAN PATENT APPLICATION**
published in accordance with Art. 153(4) EPC

(43) Date of publication:
**25.03.2026 Bulletin 2026/13**

(21) Application number: **24806645.8**

(22) Date of filing: **16.05.2024**

(51) International Patent Classification (IPC):
**B60R 13/08** (2006.01)   **C03C 25/16** (2006.01)

(52) Cooperative Patent Classification (CPC):
**B32B 17/02; B32B 17/06; B32B 17/10; B32B 27/40; B32B 33/00; B60R 13/02; B60R 13/08; C03C 25/16; C03C 25/20; C03C 25/42; C03C 25/47**

(86) International application number:
**PCT/CN2024/093718**

(87) International publication number:
**WO 2024/235295 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.05.2023 CN 202310557936**

(71) Applicant: **SSI New Material (Zhenjiang) Co., Ltd.**
**Zhenjiang, Jiangsu 212006 (CN)**

(72) Inventors:
• **GUO, Mingbo**
 **Zhenjiang, Jiangsu 212006 (CN)**
• **GONG, Chang**
 **Zhenjiang, Jiangsu 212006 (CN)**
• **ZHANG, Lei**
 **Zhenjiang, Jiangsu 212006 (CN)**
• **MA, Yuanhong**
 **Zhenjiang, Jiangsu 212006 (CN)**

(74) Representative: **Isern Patentes y Marcas S.L.**
 **Avda. Diagonal, 463 Bis, 2°**
 **08036 Barcelona (ES)**

(54) **MODIFIED INORGANIC FIBER MATERIAL AND PREPARATION METHOD THEREFOR, AUTOMOBILE ROOF LINING COMPOSITE MATERIAL, SOUND INSULATION COMPOSITE MATERIAL, AND VEHICLE**

(57)    Disclosed are a modified inorganic fiber material and a preparation method thereof, an vehicle headliner composite material, a sound-absorbing composite material and a vehicle, in which the modified inorganic fiber material includes a porous inorganic fiber material and a porous powder material, the porous powder material being distributed, through the bonding of an adhesive, on a surface of the porous inorganic fiber material and in a three-dimensional network structure of an internal space thereof; and in which a content of the porous powder material and the adhesive is 10 to 200 $g/m^2$, and the content = (C-B)/A, where A and B represent a surface area and a mass of the porous inorganic fiber material, respectively, with units of $m^2$ and g respectively, and C represents a total mass of the modified inorganic fiber material, with a unit of g. The sound absorption coefficient of the modified inorganic fiber material is significantly improved to achieve efficient sound absorption and noise reduction function. By using the modified inorganic fiber material as the material of the inorganic fiber material layer in the vehicle headliner composite material, the sound absorption and noise reduction function of the vehicle headliner composite material can be significantly improved, thereby reducing the noise in the vehicle and improving the comfort of passengers onboard.

FIG. 2

EP 4 714 752 A1

**Description**

RELATED APPLICATION

The present application claims the priority of Chinese patent application No. 202310557936.3, filed with the China National Intellectual Property Administration on May 17, 2023, and titled "modified inorganic fiber material and preparation method thereof and vehicle headliner composite material", the entire content of which is incorporated herein by reference.

TECHNICAL FIELD

The present disclosure relates to a modified inorganic fiber material and a preparation method thereof, a vehicle headliner composite material, a sound-absorbing composite material, and a vehicle, which belongs to the technical field of materials, and particularly to related materials used in vehicles.

BACKGROUND

At present, with the development and progress of society and the improvement in living standards, vehicles, as ordinary consumer goods, have entered thousands of households. Meanwhile, consumers are paying increasing attention to and having higher requirements for the control level of noise and vibration inside vehicles. Noise vibration harshness (NVH) refers to the subjective perception characteristics of passengers regarding vehicles in terms of auditory, tactile, and visual aspects. NVH performance is the most perceptible vehicle's performance to passengers and an important indicator for measuring vehicle quality.

A vehicle headliner is one of important interior decorative parts of a vehicle, and it not only significantly improves the interior decorative quality of the vehicle but also has the functions of heat insulation, sound insulation, and noise reduction, thereby enhancing the comfort of passengers inside the vehicle. Due to the large area, the vehicle headliner has an important influence on the absorption of noise inside the vehicle. From this perspective, it is of great significance to develop a vehicle headliner material with efficient sound absorption and noise reduction function, so as to significantly reduce the noise inside the vehicle and improve the comfort of passengers.

Some enterprises have made attempts and efforts to enhance and improve the sound absorption and noise reduction function of the vehicle headliner, as detailed below.

CN103921504A discloses a novel vehicle headliner and a production process thereof. The disclosed novel vehicle headliner is formed by sequentially combining a composite knitted fabric, a fiberglass mat, a foam board, another fiberglass mat and a bottom-layer non-woven fabric from top to bottom by adhesive films. The process for producing the novel vehicle headliner combines the advantages of a dry-forming process, such as simple procedures and high production rate, and the advantages of a wet-forming process, such as better product forming performance than a dry-process headliner, and lightweight products. That is, the disclosed forming process is to form the novel vehicle headliner under dry conditions in a wet-forming way (cold material and hot die). This prior art reduces the volatile organic compound (VOC) emissions of the product, improves the noise vibration and harshness (NVH) performance of the product, and has the advantages such as high product forming performance, lightweight product, improved production rate of the product, and low environmental pollution during production.

CN211417409U discloses a composite material vehicle roof, comprising a carbon fiber composite roof body and a skylight frame, a left end of the carbon fiber composite roof body is adhesively connected to a front reinforcer, a right end of the carbon fiber composite roof body is adhesively connected to a rear reinforcer, and the skylight frame is located inside the left end of the carbon fiber composite roof body. Compared with the existing ordinary vehicle roofs, this composite material vehicle roof can reduce the weight of the vehicle to realize lightweight of the vehicle, thus enabling the vehicle to achieve the effect of energy conservation and emission reduction, and improving the environmental friendliness of the vehicle roof. It also enhances the rigidity and aging resistance of the vehicle roof, thus improving the dent resistance and the service life of the vehicle roof. Meanwhile, it increases the specific modulus of the vehicle roof, improves the NVH performance of the roof, enhances the damping and the sound insulation performance of the vehicle roof, and adopts a wet compression forming process.

However, both of the prior arts only focus on improvements in the preparation process of the vehicle headliner, without enhancing the sound absorption and noise reduction function from the perspective of the materials used in the vehicle headliner.

Therefore, it has become an urgent technical problem to be solved in the art to provide a novel modified inorganic fiber material and a preparation method thereof, as well as a vehicle headliner composite material, a sound-absorbing composite material and a vehicle which include the modified inorganic fiber material.

SUMMARY

In order to solve the above disadvantages and deficiencies, an objective of the present disclosure is to provide a modified inorganic fiber material.

Another objective of the present disclosure is to provide a preparation method for the aforementioned modified inorganic fiber material.

Still another objective of the present disclosure is to provide a vehicle headliner composite material, in which an inorganic fiber material layer is made of the aforementioned modified inorganic fiber material.

Yet another objective of the present disclosure is to provide a sound-absorbing composite material, in which an inorganic fiber material layer is made of the aforementioned modified inorganic fiber material.

A final objective of the present disclosure is to provide a vehicle, which includes the aforementioned sound-absorbing composite material.

In order to achieve the above objectives, in an aspect, the present disclosure provides a modified inorganic fiber material, including a porous inorganic fiber material and a porous powder material, the porous powder material being distributed, through the bonding of an adhesive, on a surface of the porous inorganic fiber material and within a three-dimensional network structure of an internal space of the porous inorganic fiber material;

in which a content of the porous powder material and the adhesive is 10 to 200 g/m$^2$, and the content = (C-B)/A, where A and B represent a surface area and a mass of the porous inorganic fiber material, respectively, with units of m$^2$ and g respectively, and C represents a total mass of the modified inorganic fiber material, with a unit of g.

As a specific implementation of the modified inorganic fiber material of the present disclosure, in which the modified inorganic fiber material is prepared by uniformly mixing the porous powder material, the adhesive, an auxiliary agent and water to obtain a mixed slurry, then uniformly coating the mixed slurry on a surface of the porous inorganic fiber material, and performing freezing and vacuum freeze-drying treatment.

As a specific implementation of the modified inorganic fiber material of the present disclosure, in which the porous inorganic fiber material has a loose and porous three-dimensional network structure, with a thickness of 80 to 600 μm and a grammage of 20 to 200 g/m$^2$.

As a specific implementation of the modified inorganic fiber material of the present disclosure, in which the porous inorganic fiber material includes an inorganic fiber selected from the group consisting of glass fiber, ceramic fiber, basalt fiber, carbon fiber, quartz fiber, asbestos fiber, volcanic rock fiber, metal fiber or alumina fiber.

As a specific implementation of the modified inorganic fiber material of the present disclosure, in which the porous powder material has a sound absorption and noise reduction function, including one or combinations of zeolite molecular sieve, activated silica, activated carbon, surface-porous calcium carbonate and surface-porous calcium silicate.

In order to improve the sound absorption and noise reduction effect of the modified inorganic fiber material to a greater extent, as a specific implementation of the modified inorganic fiber material of the present disclosure, in which the zeolite molecular sieve includes one or combinations of MFI-structured molecular sieve, FER-structured molecular sieve, CHA-structured molecular sieve, MEL-structured molecular sieve, TON-structured molecular sieve and MTT-structured molecular sieve.

As a specific implementation of the modified inorganic fiber material of the present disclosure, in which the zeolite molecular sieve has a particle size of 0.5 to 10 μm.

As a specific implementation of the modified inorganic fiber material of the present disclosure, in which the zeolite molecular sieve includes micropores with a pore size of 0.3 to 0.7 nm and mesopores with a pore size of 10 to 30 nm.

As a specific implementation of the modified inorganic fiber material of the present disclosure, in which the zeolite molecular sieve is a ZSM-5 molecular sieve.

As a specific implementation of the modified inorganic fiber material of the present disclosure, in which the adhesive includes an organic adhesive and/or an inorganic adhesive; in which the organic adhesive includes one or combinations of polyacrylate, an acrylic copolymer, polyurethane, styrene-butadiene emulsion, styrene acrylate, styrene acetate emulsion, polyvinyl acetate emulsion, silicone resin and polybutadiene rubber latex; and the inorganic adhesive includes one or combinations of silica sol, aluminum sol and pseudo-boehmite.

As a specific implementation of the modified inorganic fiber material of the present disclosure, in which the modified inorganic fiber material has a thickness determined by the porous inorganic fiber material, and the thickness ranges from 80 to 600 μm.

In another aspect, the present disclosure further provides a preparation method of the aforementioned modified inorganic fiber material, in which the preparation method includes:

(1) uniformly mixing a porous powder material, an adhesive, an auxiliary agent and water to obtain a mixed slurry;
(2) uniformly coating the mixed slurry on a surface of a porous inorganic fiber material; and
(3) drying a product obtained in step (2) to obtain the modified inorganic fiber material.

In step (2) of the preparation method of the aforementioned modified inorganic fiber material, the mixed slurry may be uniformly coated on a side surface of the porous inorganic fiber material, and after coating, the mixed slurry may penetrate into the interior of the porous inorganic fiber material and further diffuse to the other side surface of the porous inorganic fiber material. The mixed slurry may also be uniformly coated on both side surfaces of the porous inorganic fiber material simultaneously, and after coating, the mixed slurry may also penetrate into the interior of the porous inorganic fiber material. Moreover, on the premise of the same coating amount, i.e., the mass of an absolute dry paint (which refers to the porous powder material and the adhesive in the present disclosure) per unit area, the effects of these two coating modes are the same. It can be seen that regardless of which coating mode is adopted, both side surfaces of the inorganic fiber material are modified.

As a specific implementation of the preparation method of the present disclosure, in which a mass ratio for the porous powder material, the adhesive, the water and the auxiliary agent is 100:4-10:1-159:1-159, exemplarily 100:5-8.5:5-95:5-95, and the dosages of the porous powder material, the adhesive and the auxiliary agent are all calculated based on absolute dry masses of active ingredients thereof.

As a specific implementation of the preparation method of the present disclosure, in which the auxiliary agent is a liquid auxiliary agent, which can be frozen at -30°C to -50°C, and can be sublimated at 60°C to 80°C under a vacuum degree of less than 15 Pa.

As a specific implementation of the preparation method of the present disclosure, in which the liquid auxiliary agent has a viscosity of not less than 500 cp at a temperature of 20°C.

As a specific implementation of the preparation method of the present disclosure, in which the auxiliary agent includes one or combinations of ethylene glycol (having a melting point of -13°C and a boiling point of 194°C/760 mmHg), 2,3-butanediol (having a melting point of 18°C and a boiling point of 179°C/760 mmHg), 1,4-butanediol, 1,3-butanediol and 1,5-pentanediol.

The auxiliary agent used in the present disclosure is a high-viscosity liquid auxiliary agent, and the addition amount thereof may be changed to adjust the viscosity of the mixed slurry, so that the viscosity of the mixed slurry can meet the requirement of the coating operation. Meanwhile, during the formation and drying process of the modified inorganic fiber material, the auxiliary agent is easy to be separated from the porous inorganic fiber material, the porous powder material and the adhesive, without affecting the acoustic performance of the modified inorganic fiber material. However, for the auxiliary agents generally used in the art, such as starch, polyvinyl alcohol, carboxymethyl cellulose and synthetic coating thickeners, although the addition amounts thereof may be changed to adjust the viscosity of the mixed slurry, these substances do not volatilize during the formation and drying process of the modified inorganic fiber material, and maybe adsorbed by the porous powder material, thereby having a serious negative impact on the full exertion of the acoustic performance and the sound absorption and noise reduction performance of the modified inorganic fiber material.

As a specific implementation of the preparation method of the present disclosure, in which the mixed slurry has a viscosity of is 30 to 800 cp.

As a specific implementation of the preparation method of the present disclosure, in which the water includes one or combinations of deionized water, distilled water and reverse osmosis water.

As a specific implementation of the preparation method of the present disclosure, in which in step (3), the drying includes firstly performing freezing on the product obtained in step (2), and then performing vacuum freeze-drying treatment on the product obtained after the freezing;
or the drying includes directly performing high-temperature drying on the product obtained in step (2).

As a specific implementation of the preparation method of the present disclosure, in which the temperature of the freezing is not higher than -20°C, exemplarily -30 to -50°C, and the time of the freezing is within 60 seconds;
the vacuum freeze-drying treatment includes: raising a temperature from not higher than -20°C to 60 -80°C via a programmed temperature ramp after the freezing, and maintaining a vacuum degree of less than 15 Pa.

As a specific implementation of the preparation method of the present disclosure, in which the high-temperature drying is drying at 85 to 150°C for 60 to 300 min.

Exemplarily, the high-temperature drying is carried out in a pressure-reduced or vacuum environment. Under such high-temperature drying condition, the water and the auxiliary agents in the mixed slurry may also be removed, while the porous powder material and the adhesive continue to be distributed on a surface and throughout an entire internal structure (a three-dimensional network structure of an internal space) of the porous inorganic fiber material, thereby obtaining the modified inorganic fiber material.

As a specific implementation of the preparation method of the present disclosure, in which step (1) specifically includes:
accurately weighing and adding the porous powder material, the adhesive, and the auxiliary agent into water of a required amount, and uniformly dispersing and mixing the porous powder material, the adhesive, and the auxiliary agent by means of conventional dispersion methods such as stirring, shearing and ultrasonication, so as to obtain a uniformly dispersed mixed slurry. It can be seen that the purpose of step (1) is to prepare a uniformly dispersed mixed slurry and ensure that the mixed slurry has a certain viscosity, so as to meet the requirement of the coating operation in step (2).

As a specific implementation of the preparation method of the present disclosure, in which step (2) specifically includes:

uniformly coating the mixed slurry on the surface of the porous inorganic fiber material using a conventional coater such as a bar coater, a blade coater, a film transfer coater (also referred to as a roll transfer coaters), and a bar plus blade coater. During the coating process, the modified inorganic fiber material with a coating amount of 10 to 200 g/m$^2$ can be obtained by adjusting the setting of the coater, changing the concentration of the porous powder material in the mixed slurry and the viscosity of the mixed slurry, and selecting the porous inorganic fiber materials with different thicknesses.

Since the porous inorganic fiber material selected in the present disclosure has a loose and porous three-dimensional network structure, after the coating, the mixed slurry may be uniformly absorbed by the surface of the porous inorganic fiber material and the three-dimensional network structure of the internal space, thereby being uniformly distributed on the surface and throughout the entire internal structure (the three-dimensional network structure of the internal space) of the porous inorganic fiber material. This is different from the coating process of the conventional coated paper, because after coating, the paint of the coated paper is required to remain as much as possible on the surface of the base paper.

As a specific implementation of the preparation method of the present disclosure, in which the freezing in step (3) specifically includes: after the coating operation is completed, promptly transferring a product obtained in step (2) to a vacuum freeze dryer for rapid freezing.

As a specific implementation of the preparation method of the present disclosure, in which the vacuum freeze-drying treatment in step (3) specifically includes: when the mixed slurry is completely freeze-formed on a surface and throughout an entire internal structure (a three-dimensional network structure of an internal space) of a porous planar carrier material, starting a vacuum pump, setting a temperature rise program of the vacuum freeze dryer to raise the temperature from not higher than -20°C (exemplarily -30 to -50°C) to 60 to 80°C through a programmed temperature rise, and maintaining a vacuum degree of less than 15 Pa for vacuum freeze-drying treatment.

During the operation of the vacuum freeze dryer, due to the extremely low ultimate vacuum degree of the device (usually less than 15 Pa), the water and auxiliary agents having been frozen in the mixed slurry may gradually sublimate. But the porous powder material and the adhesive remain distributed on the surface and throughout the entire internal structure (the three-dimensional network structure of the internal space) of the porous inorganic fiber material, thereby obtaining the modified inorganic fiber material. Meanwhile, the sublimation of the water and auxiliary agents produces a large number of uniformly distributed pores on the surface of and inside the modified inorganic fiber material, which facilitates air circulation and also promotes the full exertion of the acoustic performance and the sound absorption and noise reduction performance of the porous powder material.

In still another aspect, the present disclosure further provides an vehicle headliner composite material, including a polyurethane layer, inorganic fiber material layers disposed on sides of the polyurethane layer, respectively, and a decorative layer, in which the inorganic fiber material layer is made of the aforementioned modified inorganic fiber material described above. The vehicle headliner composite material of the present disclosure has an efficient sound absorption and noise reduction function.

The present disclosure does not have any specific requirements on the preparation method of the vehicle headliner composite material, which may be prepared in any existing conventional method, or the preparation method may be reasonably adjusted and improved according to the actual on-site operation needs, as long as the vehicle headliner composite material can be obtained.

In yet another aspect, the present disclosure further provides a sound-absorbing composite material, including an inorganic fiber material layer and a protective layer disposed on at least one side of the inorganic fiber material layer, in which the inorganic fiber material layer is made of the aforementioned modified inorganic fiber material.

The present disclosure does not have any specific requirements on the material of the protective layer in the sound-absorbing composite material, which may be reasonably selected and adjusted according to actual needs. For example, the material of the protective layer may include a powder-fall-preventing material and/or a waterproof material, in which the powder-fall-preventing material may be meshed fabrics, etc., and the waterproof material may be a waterproof film, etc.

In a final aspect, the present disclosure further provides a vehicle, including the aforementioned sound-absorbing composite material which is fixed to a vehicle body structure and/or the interior of the vehicle. By fixing the sound-absorbing composite material to the vehicle body structure and/or the interior of the vehicle, it is possible to reduce noise generated by the operation of the vehicle and/or noise externally transmitted into the vehicle.

Compared with the prior art, the advantageous technical effects achievable by the present disclosure are as follows.

1. The modified inorganic fiber material of the present disclosure has a significantly improved sound absorption coefficient and exhibits efficient sound absorption and noise reduction function.

2. When the inorganic fiber material layer in the vehicle headliner composite material adopts the modified inorganic fiber material of the present disclosure, the sound absorption and noise reduction function of the vehicle headliner composite material can be significantly enhanced without changing the existing preparation process conditions of the vehicle headliner composite material, thereby reducing the noise in the vehicle and improving the comfort of passengers onboard.

3. The preparation method of the modified inorganic fiber material of the present disclosure is simple and feasible, requiring no special equipment and involving easy operations. Moreover, since a coating operation is adopted in the preparation of the modified inorganic fiber material, the present disclosure can realize the efficient preparation of the modified inorganic fiber material.

BRIEF DESCRIPTION OF THE DRAWINGS

In order to more clearly explain the technical solutions in the embodiments of the present disclosure or in the prior art, the drawings to be used in the description of the embodiments will be briefly introduced below. Obviously, the drawings involved in the following description only illustrate some embodiments of the present disclosure, and other drawings can be obtained by persons of ordinary skill in the art according to these drawings without paying any creative effort.

FIG. 1 illustrates a surface view of a glass fiber with a grammage of 25 $g/m^2$ used in Embodiment 1 of the present disclosure, obtained by a high-definition digital microscope.
FIG. 2 illustrates a surface view of a modified glass fiber prepared in Embodiment 1 of the present disclosure, obtained by a high-definition digital microscope.
FIG. 3 illustrates a cross-sectional view of a modified glass fiber prepared in Embodiment 1 of the present disclosure, obtained by a high-definition digital microscope.
FIG. 4 illustrates a cross-sectional view of a modified glass fiber prepared in Embodiment 3 of the present disclosure, obtained by a high-definition digital microscope.
FIG. 5 illustrates a schematic diagram of a vehicle headliner composite material according to Embodiment 4 of the present disclosure.

Description of main reference numerals:

1: polyurethane layer;
2: inorganic fiber material layer;
3: decoration layer.

DETAILED DESCRIPTION OF THE EMBODIMENTS

It should be noted that the term "include/include" and any variation thereof in the specification and the claims of the present disclosure are intended to cover non-exclusive inclusions. For example, a process, a method, a system, a product, or a device that includes a series of steps or units is not necessarily limited to those explicitly listed, but may include other steps or units not explicitly listed or inherent to the process, the method, (the system,) the product, or the device.
A "range" disclosed in the present disclosure is given in the form of lower and upper limits, which may be one or more lower limits and one or more upper limits respectively. A given range is defined by selecting a lower limit and an upper limit. The selected lower and upper limits define the boundaries of the particular range. All ranges defined in this way are combinable, i.e., any lower limit may be combined with any upper limit to form a range. For example, when ranges of 60 to 120 and 80 to 110 are listed for a specific parameter, it is understood that ranges of 60 to 110 and 80 to 120 are also contemplated. Additionally, if the listed minimum range values are 1 and 2, and the listed maximum range values are 3, 4, and 5, the following ranges are all contemplated: 1 to 3, 1 to 4, 1 to 5, 2 to 3, 2 to 4, and 2 to 5.
In the present disclosure, unless otherwise specified, a numerical range "a to b" represents an abbreviated expression of any combination of real numbers between a and b, where both a and b are real numbers. For example, a numerical range "0 to 5" indicates that all real numbers between "0 to 5" are fully listed in the present disclosure, and "0-5" is only an abbreviated expression of these numerical combinations.
In the present disclosure, unless otherwise specified, all the described embodiments and preferred embodiments mentioned in the present disclosure can be combined with each other to form new technical solutions.
In the present disclosure, unless otherwise specified, all the technical features and preferred features mentioned in the present disclosure can be combined with each other to form new technical solutions.
In the present disclosure, unless otherwise specified, the term "two" as used in this specification refers to "at least two".

In the present disclosure, unless otherwise specified, all the steps mentioned herein may be performed in sequence or randomly, but exemplarily in sequence. For example, when the method includes steps (a) and (b), it means the method may include steps (a) and (b) performed in sequence, or steps (b) and (a) performed in sequence. For example, when it is mentioned that the method may further include step (c), it means that step (c) may be added into the method in any order. For instance, the method may include steps (a), (b) and (c), or steps (a), (c) and (b), or steps (c), (a) and (b), etc.

In order that the objectives, technical solutions, and advantages of the present disclosure are clearer, the present disclosure will be further described in detail below with reference to the attached tables, drawings, and examples. Those described below are part of, rather than all, of the embodiments of the present disclosure, and are only used to illustrate the present disclosure and should not be regarded as limiting the scope of the present disclosure. Based on the embodiments of the present disclosure, any other embodiment obtained by persons of ordinary skill in the art without paying any creative effort should fall within the protection scope of the present disclosure. Where specific conditions are not specified, the conventional conditions or the conditions recommended by the manufacturer should be followed. Reagents or instruments used are conventional products that can be purchased in the market if the manufacturer is not indicated.

Embodiment 1

This embodiment provides a modified glass fiber material, which is prepared by a preparation method including the following steps.

(a) Accurately weighing 100 parts by weight of ZSM-5 molecular sieve, 5 parts by weight of styrene-butadiene rubber adhesive, 85 parts by weight of deionized water, and 5 parts by weight of ethylene glycol, in which the dosages of the ZSM-5 molecular sieve, the styrene-butadiene rubber adhesive, and the ethylene glycol are all calculated based on absolute dry masses of active ingredients thereof; adding the ZSM-5 molecular sieve, the styrene-butadiene rubber adhesive, and the ethylene glycol into the deionized water to be mixed and stirred uniformly to obtain a mixed slurry; and measuring a viscosity of the mixed slurry as 52.5 cp by a digital rotational viscometer.

In which, the porous powder material of the ZSM-5 molecular sieve with the sound absorption and noise reduction function has an average particle size of 1.5 $\mu$m, including micropores with a pore size of 0.55 nm and mesopores with a pore size of 20 nm.

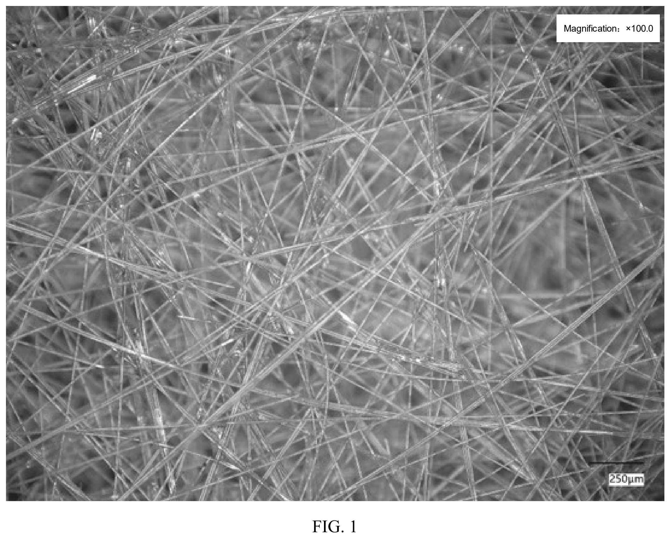

(b) Using a blade coater to uniformly coat the mixed slurry on the glass fiber with a grammage of 25 g/m$^2$ (the surface view is illustrated in FIG. 1).

(c) After the coating operation is completed, promptly transferring a product obtained in step (b) to a vacuum freeze dryer for rapid freezing at a temperature of -40°C for 5 seconds.

(d) After the mixed slurry is completely frozen on a surface and throughout an entire internal structure (a three-dimensional network structure of an internal space) of the glass fiber material, starting a vacuum pump, setting a temperature rise program of the vacuum freeze dryer to raise the temperature from -40°C to 75°C, and maintaining a vacuum degree of less than 15 Pa for vacuum freeze-drying treatment; after the treatment, the modified glass fiber material is obtained, marked as a Test Sample 1#.

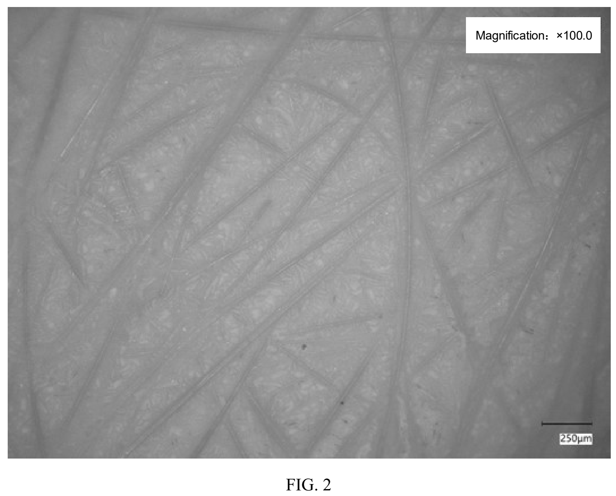

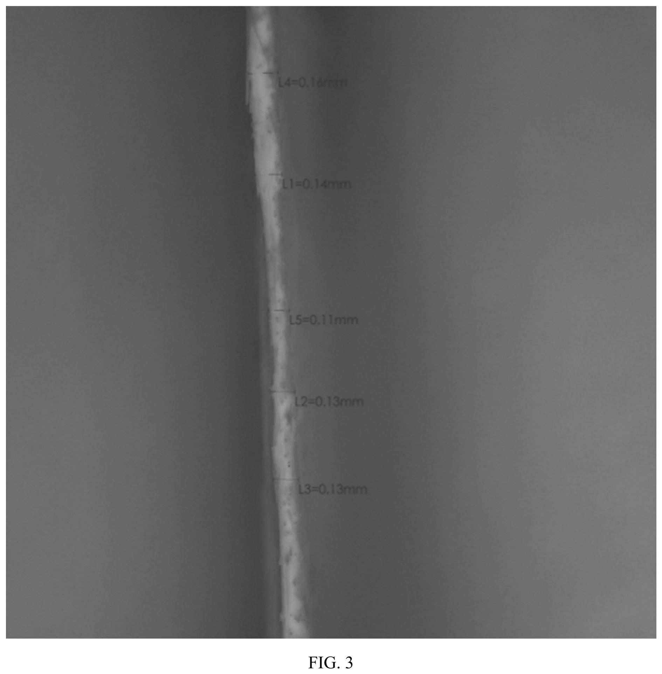

The surface view and the cross-sectional view of the Test Sample 1# prepared in this embodiment are illustrated in FIGS. 2 and 3, respectively. By comparing FIG. 1 and FIG. 2, it can be seen that the porous powder material continues to be distributed on the surface and throughout the entire internal structure (the three-dimensional network structure of the internal space) of the porous glass fiber material through the bonding effect of the adhesive, and the sublimation of water and auxiliary agents leads to the formation of a large number of uniformly distributed pores on the surface of and inside the modified glass fiber.

As can be seen from FIG. 3, the average thickness of the Test Sample 1# is 134 $\mu$m.

Embodiment 2

This embodiment provides a modified glass fiber material, which is prepared by a preparation method including the following steps.

(a) Accurately weighing 100 parts by weight of ZSM-5 molecular sieve, 7 parts by weight of styrene-butadiene rubber adhesive, 95 parts by weight of deionized water, and 20 parts by weight of ethylene glycol, in which the dosages of the ZSM-5 molecular sieve, the styrene-butadiene rubber adhesive, and the ethylene glycol are all calculated based on absolute dry masses of active ingredients thereof; adding the ZSM-5 molecular sieve, the styrene-butadiene rubber adhesive, and the ethylene glycol into the deionized water to be mixed and stirred uniformly to obtain a mixed slurry; and measuring a viscosity of the mixed slurry as 60.0 cp by a digital rotational viscometer.

In which, the porous powder material of the ZSM-5 molecular sieve with the sound absorption and noise reduction function has an average particle size of 1.5 $\mu$m, including micropores with a pore size of 0.55 nm and mesopores with a pore size of 20 nm.

(b) Using a blade coater to uniformly coat the mixed slurry on the glass fiber with a grammage of 25 g/m$^2$.

(c) After the coating operation is completed, promptly transferring a product obtained in step (b) to a vacuum freeze dryer for rapid freezing at a temperature of -40°C for 8 seconds.

(d) After the mixed slurry is completely freeze-formed on a surface and throughout an entire internal structure (a three-dimensional network structure of an internal space) of the glass fiber material, starting a vacuum pump, setting a temperature rise program of the vacuum freeze dryer to raise the temperature from -40°C to 75°C, and maintaining a vacuum degree of less than 15 Pa for vacuum freeze-drying treatment; after the treatment, the modified glass fiber material is obtained, marked as a Test Sample 2#.

Based on the characterization results in Embodiment 1, it can be reasonably expected that in the Test Sample 2# prepared in this embodiment, the porous powder material also continues to be distributed on the surface and throughout the entire internal structure (the three-dimensional network structure of the internal space) of the porous glass fiber material through the bonding effect of the adhesive, and the sublimation of water and auxiliary agents also leads to the formation of a large number of uniformly distributed pores on the surface of and inside the modified glass fiber.

Embodiment 3

This embodiment provides a modified glass fiber material, which is prepared by a preparation method including the following steps.

(a) Accurately weighing 50 parts by weight of ZSM-5 molecular sieve, 50 parts by weight of Silicalite-1 molecular sieve, 5 parts by weight of styrene-butadiene rubber adhesive, 3.5 parts by weight of polyacrylate adhesive, 20 parts by weight of deionized water, and 90 parts by weight of ethylene glycol, in which the dosages of the ZSM-5 molecular sieve, the MFI-structured molecular sieve, the styrene-butadiene rubber adhesive, the polyacrylate adhesive, and the ethylene glycol are all calculated based on absolute dry masses of active ingredients thereof; adding the ZSM-5 molecular sieve, the MFI-structured molecular sieve, the styrene-butadiene rubber adhesive, the polyacrylate adhesive, and the ethylene glycol into the deionized water to be mixed and stirred uniformly to obtain a mixed slurry; and measuring a viscosity of the mixed slurry as 119 cp by a digital rotational viscometer.

In which, the porous powder material of the ZSM-5 molecular sieve with the sound absorption and noise reduction function has an average particle size of 1.5 $\mu$m, including micropores with a pore size of 0.55 nm and mesopores with a pore size of 20 nm; and the porous powder material of the Silicalite-1 molecular sieve with the sound absorption and noise reduction function has an average particle size of 1.4 $\mu$m, including micropores with a pore size of 0.60 nm and mesopores with a pore size of 11 nm.

(b) Using a blade coater to uniformly coat the mixed slurry on the glass fiber with a grammage of 50 g/m$^2$.

(c) After the coating operation is completed, promptly transferring a product obtained in step (b) to a vacuum freeze dryer for rapid freezing at a temperature of -40°C for 20 seconds.

(e) After the mixed slurry is completely freeze-formed on a surface and throughout an entire internal structure (a three-dimensional network structure of an internal space) of the glass fiber material, starting a vacuum pump, setting a temperature rise program of the vacuum freeze dryer to raise the temperature from -40°C to 75°C, and maintaining a vacuum degree of less than 15 Pa for vacuum freeze-drying treatment; after the treatment, the modified glass fiber material is obtained, marked as a Test Sample 3#.

Based on the characterization results in Embodiment 1, it can be reasonably expected that in the Test Sample 3# prepared in this embodiment, the porous powder material also continues to be distributed on the surface and throughout the entire internal structure (the three-dimensional network structure of the internal space) of the porous glass fiber material through the bonding effect of the adhesive, and the sublimation of water and auxiliary agents also leads to the formation of a large number of uniformly distributed pores on the surface of and inside the modified glass fiber.

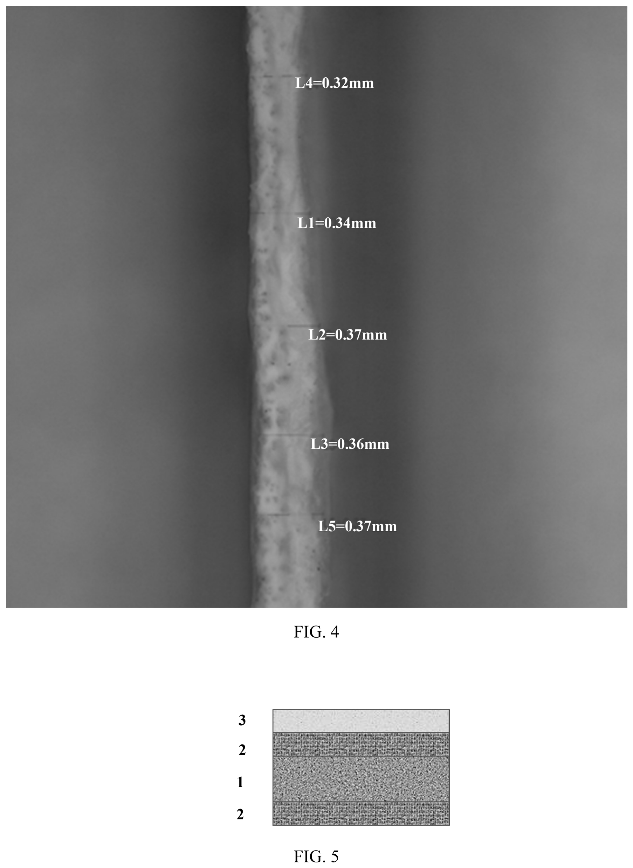

The cross-sectional view of the Test Sample 3# prepared in this embodiment is illustrated in FIG. 4, from which it can be seen that the average thickness of the Test Sample 3# is 352 $\mu$m.

Embodiment 4

This embodiment provides a modified glass fiber material, which differs from that in Embodiment 1 only in that the freeze-forming and the vacuum freeze-drying treatment are substituted. The modified glass fiber material is prepared by a preparation method including the following steps.

(a) Accurately weighing 100 parts by weight of ZSM-5 molecular sieve, 5 parts by weight of styrene-butadiene rubber adhesive, 85 parts by weight of deionized water, and 5 parts by weight of ethylene glycol, in which the dosages of the ZSM-5 molecular sieve, the styrene-butadiene rubber adhesive, and the ethylene glycol are all calculated based on absolute dry masses of active ingredients thereof; adding the ZSM-5 molecular sieve, the styrene-butadiene rubber adhesive, and the ethylene glycol into the deionized water to be mixed and stirred uniformly to obtain a mixed slurry; and measuring a viscosity of the mixed slurry as 52.5 cp by a digital rotational viscometer.

In which, the porous powder material of the ZSM-5 molecular sieve with the sound absorption and noise reduction function has an average particle size of 1.5 $\mu$m, including micropores with a pore size of 0.55 nm and mesopores with a pore size of 20 nm.

(b) Using a blade coater to uniformly coat the mixed slurry on the glass fiber with a grammage of 25 g/m$^2$.

(c) After the coating operation is completed, promptly transferring a product obtained in step (b) to a blast drying oven at 90°C for drying for 60 minutes; after that, the modified glass fiber material is obtained, marked as a Test Sample 4#.

Embodiment 5

This embodiment provides a series of vehicle headliner composite materials, with the structural diagram illustrated in FIG. 5, including a polyurethane layer 1, inorganic fiber material layers 2 disposed on two sides of the polyurethane layer 1, respectively, and a decorative layer 3 disposed on the inorganic fiber material layer 2 and facing the interior of an vehicle, in which the inorganic fiber material layers 2 are respectively made of the modified glass fiber materials according to Embodiments 1 to 4, i.e., the Test Sample 1# to the Test Sample 4#.

The series of vehicle headliner composite materials according to this embodiment are all vehicle headliner composite materials with efficient sound absorption and noise reduction function.

Comparative Example 1

This comparative example provides a modified glass fiber material, which differs from that of Embodiment 1 only in that no ethylene glycol auxiliary agent is added. The modified glass fiber material is prepared by a preparation method including the following steps.

(a) Accurately weighing 100 parts by weight of ZSM-5 molecular sieve, 5 parts by weight of styrene-butadiene rubber adhesive, and 85 parts by weight of deionized water, wherein the dosages of the ZSM-5 molecular sieve and the styrene-butadiene rubber adhesive are both calculated based on absolute dry masses of active ingredients thereof; adding the ZSM-5 molecular sieve and the styrene-butadiene rubber adhesive into the deionized water to be mixed and stirred uniformly to obtain a mixed slurry; and measuring a viscosity of the mixed slurry as 6.25 cp by a digital rotational viscometer.

In which, the porous powder material of the ZSM-5 molecular sieve with the sound absorption and noise reduction function has an average particle size of 1.5 $\mu$m, including micropores with a pore size of 0.55 nm and mesopores with a pore size of 20 nm.

(b) Using a blade coater to uniformly coat the mixed slurry on the glass fiber with a grammage of 25 g/m$^2$.

Coating result: due to the extremely low viscosity of the mixed slurry, when being coated on the glass fiber material, the mixed slurry has excessive fluidity and is absorbed by the glass fiber material very quickly, so that the coating amount on the obtained modified glass fiber material is excessively high and cannot be precisely controlled, and the uniformity of the resulting material is also very poor.

By comparing Embodiment 1 and Comparative Example 1, it can be seen that the viscosity of the mixed slurry is very important for the coating operation. The present disclosure can successfully achieve the purpose of preparing a modified glass fiber material with excellent performance only by controlling the viscosity of the mixed slurry within 30 to 800 cp through liquid auxiliary agents.

Comparative Example 2

This comparative example provides a modified glass fiber material, which is prepared by a preparation method including the following steps.

(a) Accurately weighing 50 parts by weight of ZSM-5 molecular sieve, 50 parts by weight of Silicalite-1 molecular sieve, 5 parts by weight of styrene-butadiene rubber adhesive, 3.5 parts by weight of polyacrylate adhesive, 20 parts by weight of deionized water, and 90 parts by weight of ethylene glycol, in which the dosages of the ZSM-5 molecular sieve, the MFI-structured molecular sieve, the styrene-butadiene rubber adhesive, the polyacrylate adhesive, and the ethylene glycol are all calculated based on absolute dry masses of active ingredients thereof; adding the ZSM-5 molecular sieve, the MFI-structured molecular sieve, the styrene-butadiene rubber adhesive, the polyacrylate adhesive, and the ethylene glycol into the deionized water to be mixed and stirred uniformly to obtain a mixed slurry; and measuring a viscosity of the mixed slurry as 119 cp by a digital rotational viscometer.

In which, the porous powder material of the ZSM-5 molecular sieve with the sound absorption and noise reduction function has an average particle size of 1.5 $\mu$m, including micropores with a pore size of 0.55 nm and mesopores with a pore size of 20 nm; and the porous powder material of the Silicalite-1 molecular sieve with the sound absorption and noise reduction function has an average particle size of 1.4 $\mu$m, including micropores with a pore size of 0.60 nm and mesopores with a pore size of 11 nm.

(b) Using a blade coater to uniformly coat the mixed slurry on the glass fiber with a grammage of 50 g/m$^2$.

(c) After the coating operation is completed, promptly transferring a product obtained in step (b) to a vacuum freeze dryer for rapid freezing at a temperature of -40°C for 20 seconds.

(d) After the mixed slurry is completely freeze-formed on a surface and throughout an entire internal structure (a three-dimensional network structure of an internal space) of the glass fiber material, starting a vacuum pump, setting a temperature rise program of the vacuum freeze dryer to raise the temperature from -40°C to 75°C, and maintaining a vacuum degree of less than 15 Pa for vacuum freeze-drying treatment; after the treatment, the modified glass fiber material is obtained, marked as a Reference Sample 2#.

Test Example 1

In this test example, firstly, a Test Sample 1# to a Test Sample 4# and the Reference Sample 2# are cut into 10×10 mm squares. According to the parameters in Table 1 and Formula 1) as follows, the content of the molecular sieve and the adhesive is calculated. The specific results of the content are shown in Table 1 below.

$$\text{Content of molecular sieve and adhesive} = (C - B)/A, \text{ Unit: g/m}^2, \text{ Formula 1);}$$

In Formula 1), A and B represent a surface area and a mass of the porous glass fiber material, respectively, with units of m$^2$ and g, respectively; and C represents a total mass of the modified glass fiber material, with a unit of g.

Table 1

|  | Content of molecular sieve and adhesive g/m$^2$ | Mass of glass fiber material, i.e. B 10×10 mm mg | Total mass of modified glass fiber material, i.e. C 10×10 mm mg | Total mass of molecular sieve and adhesive in modified glass fiber material 10×10 mm mg |
|---|---|---|---|---|
| Test sample 1# | 101 | 2.5 | 12.6 | 10.1 |
| Test sample 2# | 135 | 2.5 | 16.0 | 13.5 |
| Test sample 3# | 193 | 5.0 | 24.3 | 19.3 |
| Test sample 4# | 101 | 2.5 | 12.6 | 10.1 |
| Reference sample 2# | 215 | 5.0 | 26.5 | 21.5 |

Test Example 2

In this test example, a standing wave tube (i.e., an impedance tube) is used to measure the sound pressure changes of the modified glass fiber materials according to Embodiments 1 to 4 and Comparative Example 2, as well as the glass fibers with the grammages of 25 g/m$^2$ and 50 g/m$^2$ used in the embodiments and the comparative examples, under different frequencies, and then calculate sound absorption coefficients according to sound pressure change data. The obtained experimental results are shown in Table 2 below.

Table 2

| Frequency Hz | 400 | 500 | 800 | 1000 | 1250 | 1600 | 2000 | 2500 |
|---|---|---|---|---|---|---|---|---|
| Untreated, | 0.07 | 0.13 | 0.18 | 0.19 | 0.17 | 0.20 | 0.17 | 0.18 |

(continued)

| | | | | | | | | |
|---|---|---|---|---|---|---|---|---|
| glass fiber with a grammage of 25g/m$^2$ | | | | | | | | |
| Untreated, glass fiber with a grammage of 50 g/m$^2$ | 0.09 | 0.18 | 0.24 | 0.23 | 0.23 | 0.24 | 0.25 | 0.25 |
| Test sample 1# | 0.16 | 0.22 | 0.28 | 0.30 | 0.32 | 0.31 | 0.30 | 0.31 |
| Test sample 2# | 0.20 | 0.25 | 0.34 | 0.38 | 0.37 | 0.39 | 0.39 | 0.40 |
| Test sample 3# | 0.22 | 0.28 | 0.39 | 0.43 | 0.42 | 0.43 | 0.44 | 0.45 |
| Test sample 4# | 0.13 | 0.15 | 0.20 | 0.21 | 0.19 | 0.20 | 0.20 | 0.21 |
| Reference sample 2# | 0.20 | 0.25 | 0.30 | 0.33 | 0.35 | 0.31 | 0.34 | 0.32 |

From the experimental data in Table 2, it can be seen above that:

(1) The sound absorption coefficients of the untreated glass fiber material with a grammage of 25 g/m$^2$ at different frequencies are significantly lower than those of the modified glass fiber materials according to Embodiments 1, 2 and 4 at the same frequencies. This fully proves that the porous powder material with the sound absorption and noise reduction function in the modified glass fiber material according to the embodiments of the present disclosure has a very obvious noise absorption effect.

(2) The sound absorption coefficients of the untreated glass fiber material with a grammage of 50 g/m$^2$ at different frequencies are significantly lower than those of the modified glass fiber material according to Embodiment 3 at the same frequencies. This fully proves that the porous powder material with the sound absorption and noise reduction function in the modified glass fiber material according to the embodiments of the present disclosure has a very obvious noise absorption effect.

(3) By comparing the experimental data of Embodiment 4 and Embodiment 1, it can be seen that the sound absorption coefficients of the modified glass fiber material according to Embodiment 1 at different frequencies are significantly higher than those of the modified glass fiber material according to Embodiment 4 at the same frequencies. This fully proves the importance of the drying mode, and freeze-drying is superior to high-temperature drying. The reasons are as follows: in a moisture evaporation process of the high-temperature drying, under the action of a surface tension, the particles of the porous powder material with the sound absorption and noise reduction function are close to each other, so that abundant pore structures would not formed in the glass fiber material. In addition, the film-forming performance of the adhesive during the high-temperature drying is superior to that during the freeze-drying. After the film formation, the adhesive tightly wraps the glass fiber material, thereby further reducing the pore structures in the glass fiber material.

(4) By comparing the experimental result data of Embodiment 1 or Embodiment 4, Embodiment 2, and Embodiment 3, it can be seen that as the absolute dry adsorption masses of the porous powder material with the sound absorption and noise reduction function in the glass fiber material increase (among the modified glass fiber materials according to Embodiment 1 or Embodiment 4, Embodiment 2, and Embodiment 3, the absolute dry adsorption masses of the porous powder material with the sound absorption and noise reduction function in the glass fiber material are 9.62 mg, 12.62 mg, and 17.79 mg respectively), the sound absorption coefficient also increases accordingly.

In addition, by comparing the experimental result data of Embodiment 3 and Comparative Example 2, it can also be seen that when the coating amount exceeds 200 g/m$^2$, the sound absorption and noise reduction performance of the obtained modified glass fiber material decreases. This is because the coating becomes dense after being dried, with a higher density and reduced pores, thereby degrading the sound absorption and noise reduction effect of the modified glass fiber material.

To sum up, compared with the prior art, the advantageous technical effects achievable by the embodiments of the present disclosure are as follows.

1. The modified inorganic fiber material according to the embodiments of the present disclosure has a significantly improved sound absorption coefficient and exhibits efficient sound absorption and noise reduction function.

2. When the inorganic fiber material layer in the vehicle headliner composite material adopts the modified inorganic fiber material according to the embodiments of the present disclosure, the sound absorption and noise reduction function of the vehicle headliner composite material can be significantly enhanced without changing the existing preparation process conditions of the vehicle headliner composite material, thereby reducing the noise in the vehicle and improving the comfort of passengers onboard.

3. The preparation method of the modified inorganic fiber material according to the embodiments of the present disclosure is simple and feasible, requiring no special equipment and involving easy operations. Moreover, since a coating operation is adopted in the preparation of the modified inorganic fiber material, the embodiments of the present disclosure can realize the efficient preparation of the modified inorganic fiber material.

Those described are merely specific embodiments of the present disclosure and are not intended to limit the protection scope of implementation of the present disclosure. Therefore, substitutions of equivalent components, or equivalent changes and modifications made in accordance with the scope of patent protection of the present disclosure, shall still fall within the scope covered by this patent. In addition, in the present disclosure, combinations can be freely made between the technical features, between the technical features and the technical solutions, and between the technical solutions.

**Claims**

1. A modified inorganic fiber material, comprising a porous inorganic fiber material and a porous powder material, the porous powder material being distributed, through the bonding of an adhesive, on a surface of the porous inorganic fiber material and within a three-dimensional network structure of an internal space of the porous inorganic fiber material;
   wherein a content of the porous powder material and the adhesive is 10 g/m$^2$ to 200 g/m$^2$, and the content = (C-B)/A, where A and B represent a surface area and a mass of the porous inorganic fiber material, respectively, with units of m$^2$ and g respectively, and C represents a total mass of the modified inorganic fiber material, with a unit of g.

2. The modified inorganic fiber material according to claim 1, wherein the porous inorganic fiber material has a loose and porous three-dimensional network structure, with a thickness of 80 $\mu$m to 600 $\mu$m and a grammage of 20 g/m$^2$ to 200 g/m$^2$.

3. The modified inorganic fiber material according to claim 1 or 2, wherein the porous inorganic fiber material comprises an inorganic fiber selected from the group consisting of glass fiber, ceramic fiber, basalt fiber, carbon fiber, quartz fiber, asbestos fiber, volcanic rock fiber, metal fiber and alumina fiber.

4. The modified inorganic fiber material according to claim 1, wherein the porous powder material is at least one selected from the group consisting of zeolite molecular sieve, activated silica, activated carbon, surface-porous calcium carbonate and surface-porous calcium silicate.

5. The modified inorganic fiber material according to claim 4, wherein the zeolite molecular sieve is at least one selected from the group consisting of MFI-structured molecular sieve, FER-structured molecular sieve, CHA-structured molecular sieve, MEL-structured molecular sieve, TON-structured molecular sieve and MTT-structured molecular sieve.

6. The modified inorganic fiber material according to claim 4, wherein the zeolite molecular sieve has a particle size of 0.5 $\mu$m to 10 $\mu$m.

7. The modified inorganic fiber material according to claim 4, wherein the zeolite molecular sieve comprises micropores with a pore size of 0.3 nm to 0.7 nm and mesopores with a pore size of 10 nm to 30 nm.

8. The modified inorganic fiber material according to any one of claims 4 to 7, wherein the zeolite molecular sieve comprises a ZSM-5 molecular sieve.

9. The modified inorganic fiber material according to claim 1, wherein the adhesive comprises an organic adhesive and/or an inorganic adhesive; wherein the organic adhesive is selected from the group consisting of polyacrylate, an acrylic copolymer, polyurethane, styrene-butadiene emulsion, styrene acrylate, styrene acetate emulsion, polyvinyl acetate emulsion, silicone resin and polybutadiene rubber latex, and combinations thereof; and wherein the inorganic adhesive is selected from the group consisting of silica sol, aluminum sol, pseudo-boehmite, and combinations thereof.

10. The modified inorganic fiber material according to claim 1 or 2, wherein the modified inorganic fiber material has a thickness of 80 $\mu$m to 600 $\mu$m.

**EP 4 714 752 A1**

11. A preparation method of the modified inorganic fiber material according to any one of claims 1 to 10, wherein the preparation method comprises:

(1) uniformly mixing a porous powder material, an adhesive, an auxiliary agent and water to obtain a mixed slurry;
(2) uniformly coating the mixed slurry on a surface of a porous inorganic fiber material; and
(3) drying a product obtained in step (2) to obtain the modified inorganic fiber material.

12. The preparation method according to claim 11, wherein a mass ratio for the porous powder material to the adhesive to the water to the auxiliary agent is 100:4-10:1-159:1-159, and the dosages of the porous powder material, the adhesive and the auxiliary agent are all calculated based on absolute dry masses of active ingredients thereof.

13. The preparation method according to claim 11, wherein the auxiliary agent is a liquid auxiliary agent, which can be frozen at -30 °C to -50°C, and can be sublimated at 60 °C to 80°C under a vacuum degree of less than 15 Pa.

14. The preparation method according to claim 13, wherein the liquid auxiliary agent has a viscosity of not less than 500 cp at a temperature of 20°C.

15. The preparation method according to any one of claims 11 to 14, wherein the auxiliary agent is at least one selected from the group consisting of ethylene glycol, 2,3-butanediol, 1,4-butanediol, 1,3-butanediol and 1,5-pentanediol.

16. The preparation method according to any one of claims 11 to 14, wherein the mixed slurry has a viscosity of is 30 to 800 cp.

17. The preparation method according to any one of claims 11 to 14, wherein the water is at least one selected from the group consisting of deionized water, distilled water and reverse osmosis water.

18. The preparation method according to any one of claims 11 to 14, wherein in step (3), the drying comprises firstly performing freezing on the product obtained in step (2), and then performing vacuum freeze-drying treatment on the product obtained after the freezing;
or the drying comprises directly performing high-temperature drying on the product obtained in step (2).

19. The preparation method according to claim 18, wherein the temperature of the freezing is not higher than -20°C, and the time of the freezing is within 60 seconds;
the vacuum freeze-drying treatment comprises: raising a temperature from not higher than -20°C to the temperature range of 60°C to 80°C via a programmed temperature ramp after freezing, and maintaining a vacuum degree of less than 15 Pa.

20. The preparation method according to claim 19, wherein the temperature of the freezing is -30°C to -50°C.

21. The preparation method according to claim 18, wherein the high-temperature drying is drying at 85 °C to 150°C for 60 min to 300 min.

22. The preparation method according to claim 18, wherein the high-temperature drying is carried out in a pressure-reduced or vacuum environment.

23. A vehicle headliner composite material, comprising a polyurethane layer, inorganic fiber material layers disposed respectively on two sides of the polyurethane layer, and a decorative layer, wherein the inorganic fiber material layer is made of the modified inorganic fiber material according to any one of claims 1 to 10.

24. A sound-absorbing composite material, comprising an inorganic fiber material layer and a protective layer disposed on at least one side of the inorganic fiber material layer, wherein the inorganic fiber material layer is made of the modified inorganic fiber material according to any one of claims 1 to 10.

25. A vehicle, comprising the sound-absorbing composite material according to claim 24, wherein the sound-absorbing composite material is fixed to a vehicle body structure and/or an interior of the vehicle.

13

FIG. 1

FIG. 2

FIG. 3

L4=0.32mm

L1=0.34mm

L2=0.37mm

L3=0.36mm

L5=0.37mm

FIG. 4

3

2

1

2

FIG. 5

## INTERNATIONAL SEARCH REPORT

| International application No. |
|---|
| **PCT/CN2024/093718** |

**A.     CLASSIFICATION OF SUBJECT MATTER**

B60R13/08(2006.01)i;  C03C25/16(2006.01)i

According to International Patent Classification (IPC) or to both national classification and IPC

**B.     FIELDS SEARCHED**

Minimum documentation searched (classification system followed by classification symbols)

IPC:  B60R, C03C

Documentation searched other than minimum documentation to the extent that such documents are included in the fields searched

Electronic data base consulted during the international search (name of data base and, where practicable, search terms used)

ENTXT, EXTXTC, VEN, CNTXT, CNABS, ISI, CNKI: 无机, 纤维, 吸音, 吸声, 沸石, 分子筛, 多孔, 活性炭, 活性二氧化硅, 玻璃, 陶瓷, 玄武岩, 碳纤维, 石棉, 火山岩, 金属, 氧化铝, 石英, 网络, 胶粘剂, 粘结, inorganic, fiber, fibre, acoustical, sound-absorb, zeolites, molecular sieves, porous, activated carbon, activated silica, glass, ceramic, basalt, carbon fiber, asbestos, volcanic rock, metal, alumina, quartz, network, adhesive, bonding

**C.     DOCUMENTS CONSIDERED TO BE RELEVANT**

| Category* | Citation of document, with indication, where appropriate, of the relevant passages | Relevant to claim No. |
|---|---|---|
| X | CN 115547284 A (AAC TECHNOLOGIES (NANJING) INC.) 30 December 2022 (2022-12-30)<br>        description, paragraphs 0010-0052, and figures 1-2 | 1-25 |
| A | CN 102533016 A (CHINA BUILDING MATERIALS ACADEMY) 04 July 2012 (2012-07-04)<br>        entire document | 1-25 |
| A | CN 115477505 A (GOERTEK INC.) 16 December 2022 (2022-12-16)<br>        entire document | 1-25 |
| A | KR 101942714 B1 (METALPLUS INC.) 17 April 2019 (2019-04-17)<br>        entire document | 1-25 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 August 2024** | **17 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/093718**

| Patent document cited in search report | | | Publication date (day/month/year) | Patent family member(s) | Publication date (day/month/year) |
|---|---|---|---|---|---|
| CN | 115547284 | A | 30 December 2022 | None | |
| CN | 102533016 | A | 04 July 2012 | None | |
| CN | 115477505 | A | 16 December 2022 | None | |
| KR | 101942714 | B1 | 17 April 2019 | None | |

Form PCT/ISA/210 (patent family annex) (July 2022)

**EP 4 714 752 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310557936
- CN 103921504 A
- CN 211417409 U